# EUROPÄISCHE PATENTSCHRIFT

(11) **EP 1 033 513 B1**
(45) Veröffentlichungstag und Bekanntmachung des Hinweises auf die Patenterteilung: **27.10.2004**
(21) Anmeldenummer: 99101821.9
(22) Anmeldetag: 28.01.1999
(51) Int. Cl.: F16J 15/34

(54) **Dichtungsanordnung für eine gasgesperrte Gleitringdichtung an rotierenden Wellen, insbesondere an Wellen von Gaskompressoren**
Sealing device for a mechanical gas seal on rotating shafts, in particular for shafts of gas compressors
Dispositif d'étanchéité pour un joint mécanique étanche au gaz pour arbres rotatifs,en particulier pour arbres de compresseurs à gaz

(43) Veröffentlichungstag der Anmeldung: 06.09.2000
(73) Patentinhaber: Flowserve Dortmund GmbH & Co. KG, 44388 Dortmund (DE)
(72) Erfinder: Schiller, Michael, 44892 Bochum (DE); Steinmann, Detlev, 45731 Waltrop (DE)
(74) Vertreter: Albrecht, Rainer Harald, Dr.-Ing.

(56) Entgegenhaltungen:
- DE-A- 1 905 593
- DE-B- 1 040 859
- US-A- 5 560 622

## Beschreibung

Die Erfindung betrifft eine Dichtungsanordnung für eine gasgesperrte Gleitringdichtung an rotierenden Wellen, insbesondere an Wellen von Gaskompressoren, mit
einem ringförmigen Grundkörper,
einem im Grundkörper an Federn abgestützten Druckring,
einem drehfest und axial beweglich am Grundkörper gehaltenen Dichtungsring mit einer präzisionsbearbeiteten Dichtfläche an der vom Druckring abgewandten Stirnseite und
einer Sekundärdichtung aus einem Elastomerring und einem in einer Führungsnut des Druckringes angeordneten Federring,
wobei die Sekundärdichtung in einem von dem Dichtungsring und dem Druckring begrenzten Ringraum angeordnet ist und der Elastomerring unter der Vorspannung des an seinem Umfang angeordneten Federringes an einer zylindrischen Fläche des Grundkörpers anliegt.

Der Grundkörper ist je nach Ausführung der Dichtungsanordnung entweder auf einer Welle montiert oder gehäusefest angeordnet. Dem Dichtungsring ist ein Gegenring zugeordnet, wobei die Dichtflächen des Dichtungsrings und/oder des Gegenrings so profiliert sind, dass sich bei Rotation der Welle ein unter Sperrdruck stehender Gasfilm zwischen den Dichtflächen bildet. Die Profilierung der Dichtflächen kann aus förderwirksamen Vertiefungen in Form von Spiralrillen bestehen, die in gasdynamischer Hinsicht ähnlich wie Schaufeln eines Kompressors wirken und eine Gasströmung erzeugen, die dem Leckstrom entgegenwirkt (EP-A 0 013 678). Die Profilierung kann ferner aus randoffenen Vertiefungen bestehen, die in der Draufsicht z. B. als T-förmige Nuten ausgebildet sind (DE-C 37 45 037).

In gasgesperrten Gleitringdichtungen zur Abdichtung hochtouriger Wellen spielt die bewegliche Sekundärdichtung eine für die Funktion der Dichtungsanordnung sehr wesentliche Rolle. Eine Haftung des Elastomerrings an der metallischen Zylinderfläche des Grundkörpers hemmt die axiale Beweglichkeit der aus Druckring und Dichtungsring bestehenden Dichtungseinheit und beeinträchtigt die selbsttätige Einstellung des Arbeitsdichtspaltes zwischen den Dichtflächen des Dichtungsrings und des Gegenrings. Bei Verwendung eines Elastomerrings ist die Haftreibung zwischen Ring und Grundkörper abhängig von der Oberflächenrauhigkeit der Kontaktflächen und von der Normalkraft, die beim Aufrecken des Elastomerrings erzeugt wird. Die Normalkraft erhöht sich, wenn der Elastomerring zwischen Druckring und Dichtungsring eingeklemmt wird. Eine Volumenvergrößerung des Elastomerrings durch chemischen und/oder thermischen Einfluss verstärkt diesen Effekt. Wird der Elastomerring hingegen mit axialem Spiel in eine Ringnut eingelegt, kann sich schon bei geringen Differenzdrücken eine hohe Leckage einstellen, weil der Elastomerring nicht definiert und mit Dichtwirkung an der Rückseite des Dichtringes anliegt. Ferner können Unebenheiten an der Oberfläche des Elastomerrings Ursache von Niederdruckleckagen sein.

Bei der aus US 5 560 622 bekannten Dichtungsanordnung, von der die Erfindung ausgeht, liegt der Druckring nicht an der Rückseite des Dichtungsrings an. Die Federkraft der auf den Druckring wirkenden Druckfedern wird über die Elastomerdichtung auf den Dichtungsring übertragen. Dabei wird der Elastomerring axial eingeklemmt. Zusätzlich ist er durch einen umfangseitig angeordneten Federring mit einer radialen Kraft beaufschlagt und an die Zylinderfläche des Grundkörpers angedrückt. Zur Kompensation der Reibungskraft zwischen Elastomerring und Zylinderfläche des Grundkörpers müssen die den Druckring beaufschlagenden Federn zur Übertragung großer axialer Federkräfte ausgelegt werden. Die erforderlichen hohen axialen Federkräfte haben auf drucklos betriebenen Gasdichtungen einen negativen Einfluss, da sie den in diesem Betriebszustand geringen Öffnungskräften im Dichtspalt zwischen Dichtungsring und Gegenring entgegenwirken. Es kann zu einem Kontakt der Dichtflächen kommen mit der Folge einer Schädigung und eines Verschleißes der Gleitringe.

Aus der Druckschrift DE-US 1 905 593 ist ein Dichtelement zur Abdichtung von Ringspalten bekannt, das aus einer Kombination eines O-Ringes mit einer Ringfeder besteht.

Ausgehend von einer Dichtungsanordnung des eingangs beschriebenen Aufbaus liegt der Erfindung die Aufgabe zugrunde, die axiale Beweglichkeit der aus Dichtungsring und Druckring bestehenden Dichtungseinheit gegenüber dem Grundkörper zu verbessern, und zwar unter Beibehaltung einer guten und betriebssicheren Dichtwirkung der Sekundärdichtung.

Zur Lösung dieser Aufgabe lehrt die Erfindung,
dass der Druckring an dem Dichtungsring anliegt und die Abmessungen des die Sekundärdichtung aufnehmenden Ringraumes so gewählt sind, dass der Elastomerring weder axial noch radial von den Kammerwänden eingeklemmt ist,
dass die Führungsnut so angeordnet ist, dass sich zwischen der Führungsnut und der Stirnfläche des Druckringes ein ringförmiger Vorsprung befindet und
dass der Federring und der Elastomerring so zueinander ausgerichtet sind, dass der Federring sowohl eine den Elastomerring gegen die Zylinderfläche des Grundkörpers drückende Radialkraft als auch eine den Elastomerring gegen den Dichtungsring drückende Axialkraft auf den Elastomerring ausübt.

Die in axialer Richtung wirkende Kraft der den Druckring stützenden Federn wird unmittelbar über den Druckring auf den Grundkörper der Dichtungsanordnung übertragen. Der Elastomerring ist vorzugsweise mit axialem Spiel in dem Ringraum, der auf der einen Seite durch die rückwärtige Stirnfläche des Dichtungsrings und auf der anderen Seite durch den Druckring begrenzt ist, angeordnet. Das Spiel ist so bemessen, dass der Elastomerring in axialer Richtung nicht geklemmt wird und eine Volumenänderung des Elastomerrings durch thermischen und/oder chemischen Einfluss ungezwängt erfolgen kann. Die Gefahr einer Beeinträchtigung der Dichtwirkung besteht nicht, weil erfindungsgemäß der Federring immer derart auf den Elastomerring einwirkt, dass dieser in jedem Fall sowohl radial als auch axial in seiner korrekten Dichtposition gehalten wird. Hierzu ist nur eine geringe Kraft nötig.

Gemäß einer bevorzugten Ausführungsform der Erfindung ist der Federring mit axialem Versatz zum Elastomerring angeordnet. Eine unter montagetechnischen Gesichtspunkten besonders vorteilhafte Ausführung sieht vor, dass der ringförmige Vorsprung zwischen der Stirnfläche des Druckrings und der Führungsnut den Einbauraum für den Elastomerring kammert und zu diesem Zweck so bemessen ist, dass der Spalt zwischen dem ringförmigen Vorsprung und der Zylinderfläche des Grundkörpers etwas kleiner ist als die radiale Dicke des Elastomerrings. Bei der Montage wird der Federring in die Führungsnut des Druckrings eingelegt, und anschließend wird der Elastomerring durch den frontseitigen Spalt in den Einbauraum der aus Grundkörper und Druckring bestehenden vormontierten Baugruppe eingedrückt. Die Sekundärdichtung bleibt durch die Kammerung des Elastomerrings in ihrer vorgegebenen Lage, so dass die weiteren Montagearbeiten leicht durchgeführt werden können.

Im folgenden wird die Erfindung anhand lediglich ein Ausführungsbeispiel darstellenden Zeichnung näher erläutert. Es zeigen in schematischer Darstellung
- Fig. 1: einen Längsschnitt durch eine gasgesperrte Dichtungsanordnung für eine rotierende Welle,
- Fig. 2: eine weitere Ausführung der Dichtungsanordnung, ebenfalls im Längsschnitt.

Zum grundsätzlichen Aufbau der in den Figuren dargestellten Dichtungsanordnung gehören ein ringförmiger Grundkörper 1, ein im Grundkörper 1 an Federn 2 abgestützter Druckring 3, ein drehfest und axial beweglich am Grundkörper 1 gehaltener Dichtungsring 4 mit einer präzisionsbearbeiteten Dichtfläche an der vom Druckring 34 abgewandten Stirnseite sowie eine Sekundärdichtung 5 aus einem Elastomerring 6 und einem Federring 7. Dem Dichtungsring 4 ist ein Gegenring 8 zugeordnet, der ebenfalls eine präzisionsbearbeitete stirnseitige Dichtfläche aufweist. Der Dichtungsring 4 und der Gegenring 8 bestehen aus einem Hartdichtungswerkstoff und sind praktisch verwindungsfrei. Sie werden auch als Gleitringe bezeichnet.

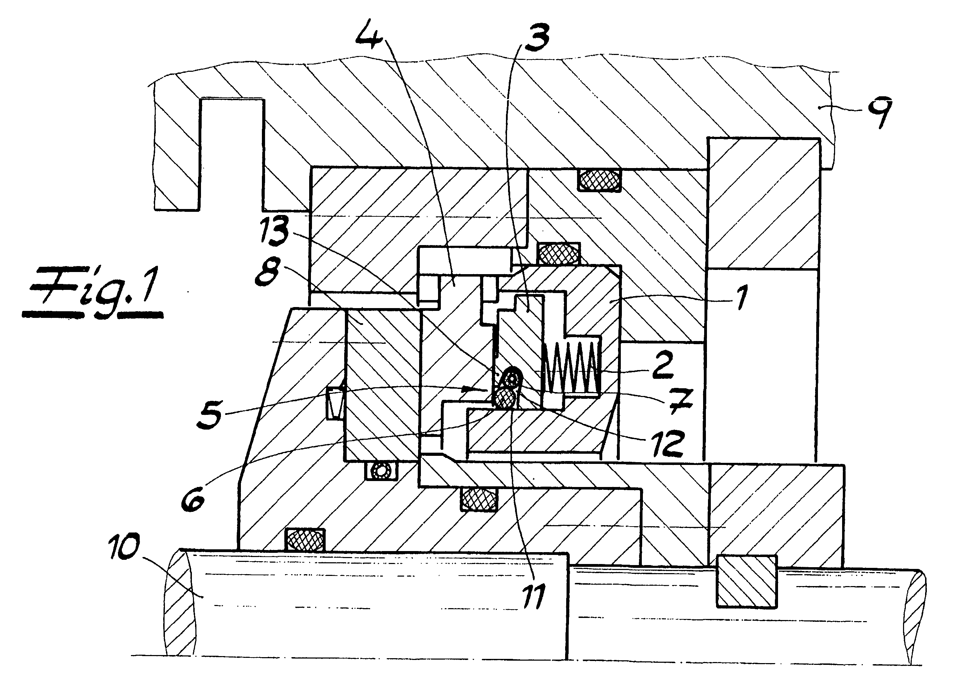

Bei der in Fig. 1 dargestellten Ausführung ist der Grundkörper1 als Gehäusering ausgebildet und in einem Gehäuse 9 fest angeordnet. Der im Gehäusering axial und federnd beweglich gehaltene Dichtungsring 4 arbeitet als Stator-Dichtungsring. Der Gegenring 8 ist wellenfest auf der Welle 10 angeordnet und führt mit dieser zusammen Rotationsbewegungen aus. Die Dichtflächen der Gleitringe 4, 8 sind so profiliert, dass sich bei der Rotation der Welle 10 ein unter Sperrdruck stehender Gasfilm zwischen den Dichtflächen bildet. Das Profil kann förderwirksame Vertiefungen in Form von Spiralrillen aufweisen oder entsprechend dem Stand der Technik aus DE-C 37 45 037 als randoffene Vertiefungen in Form von z.B. T-förmigen Nuten ausgebildet sein.

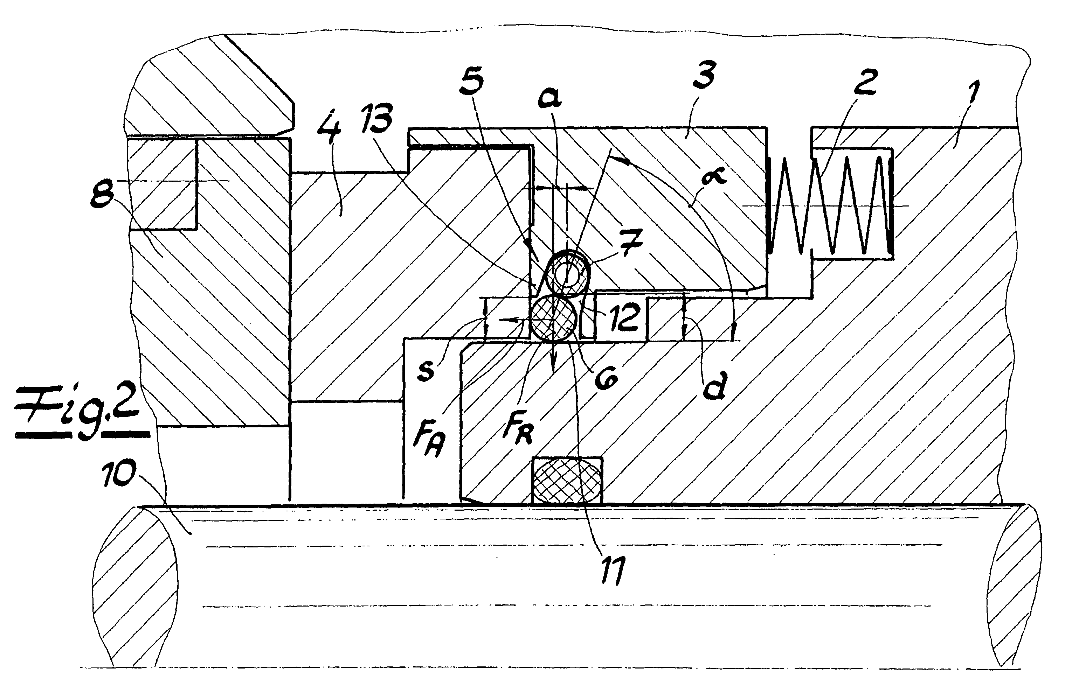

Bei der in Fig. 2 dargestellten Ausführung der Dichtungsanordnung ist der ringförmige Grundkörper 1 als Mitnehmerring ausgebildet und auf der Welle 10 montiert. Der drehfest und axial beweglich am Grundkörper 1 gehaltene Dichtungsring 4 arbeitet als Rotor-Dichtungsring. Der Gegenring 8 ist bei dieser Ausführung gehäusefest angeordnet. Die Dichtflächen der Gleitringe 4, 8 weisen die beschriebenen Profilierungen auf, so dass sich bei Rotation der Welle 10 ein Gasfilm zwischen den Dichtflächen bildet.

Sie Sekundärdichtung 5 ist in einem von dem Dichtungsring 4 und dem Druckring 3 begrenzten Ringraum angeordnet, wobei der Elastomerring 6 unter der Vorspannung des an seinem Umfang angeordneten Federrings 7 an einer zylindrischen Fläche 11 des Grundkörpers 1 anliegt. Den Figuren entnimmt man, dass die Breite des die Sekundärdichtung 5 aufnehmenden Ringraumes so bemessen ist, dass der Elastomerring mit axialem Spiel darin angeordnet ist. Der Federring 7 und der Elastomerring 6 sind so zueinander ausgerichtet, dass der Federring 7 sowohl eine den Elastomerring 6 gegen die Zylinderfläche 11 des Grundkörpers 1 drückende Radialkraft F_{R} als auch eine den Elastomerring 6 gegen den Dichtungsring 4 drückende Axialkraft F_{A} auf den Elastomerring 6 ausübt.

Der Federring 7 ist mit axialem Versatz a zum Elastomerring 6 in einer Führungsnut 12 des Druckrings 3 angeordnet. Zwischen der Führungsnut 12 und der an dem Dichtungsring 4 anliegenden Stirnfläche des Druckrigs 3 verbleibt ein ringförmiger Vorsprung 13. Der ringförmige Vorsprung 13 ist so bemessen, dass der Spalt s zwischen dem ringförmigen Vorsprung 13 und der Zylinderfläche 11 des Grundkörpers 1 etwas kleiner ist als die Stärke d des als O-Ring ausgeführten Elastomerrings 6. Durch die Bemessung des Vorsprungsprungs 13 wird der Einbauraum für den Elastomerring 6 gekammert, was die Montage erheblich vereinfacht. Die Führungsnut 12 schließt unter einem spitzen Winkel α an den Einbauraum für den Elastomerring 6 an. Zweckmäßig wird ein Winkel zwischen 30° und 60° gewählt. Das axiale Spiel zwischen dem Elastomerring 6 und dem Einbauraum ist so bemessen, dass unter Berücksichtigung der Fertigungstoleranzen des Elastomerrings 6 und unter Berücksichtigung einer möglichen Volumenzunahme aufgrund eines thermischen oder chemischen Einflusses in Betrieb keine Klemmung des Elastomerrings 6 im Ringraum auftritt und die Federkraft F_{A}, F_{R} des Federrings sowohl in axialer Richtung als auch in radialer Richtung auf den Elastomerring 6 voll wirksam ist. Ein axiales Spiel von etwa 0,2 mm ist ausreichend.

## Patentansprüche

1. Dichtungsanordnung für eine gasgesperrte Gleitringdichtung an rotierenden Wellen, insbesondere an Wellen von Gaskompressoren, mit
einem ringförmigen Grundkörper (1), der gehäusefest angeordnet oder auf einer Welle (10) montiert ist,
einem im Grundkörper (1) an Federn (2) abgestützten Druckring (3),
einem drehfest und axial beweglich am Grundkörper (1) gehaltenen Dichtungsring (4) mit einer präzisionsbearbeiteten Dichtfläche a der vom Druckring (3) abgewandten Stirnseite und
eine Sekundärdichtung (5) aus einem Elastomerring (6) und einem in einer Führungsnut (12) des Druckringes (3) angeordneten Federring (7),
wobei die Sekundärdichtung (5) in einem von dem Dichtungsring (4) und dem Druckring (3) begrenzten Ringraum angeordnet ist und der Elastomerring (6) unter der Vorspannung des an seinem Umfang angeordneten Federrings (7) an einer zylindrischen Fläche (11) des Grundkörpers (1) anliegt,
**dadurch gekennzeichnet,**
**dass** der Druckring (3) an dem Dichtungsring (4) anliegt und die Abmessungen des die Sekundärdichtung (5) aufnehmenden Ringraumes so gewählt sind, dass der Elastomerring (6) weder axial noch radial von den Kammerwänden eingeklemmt ist,
**dass** die Führungsnut (12) so angeordnet ist, dass sich zwischen der Führungsnut (12) und der Stirnfläche des Druckringes (3) ein ringförmiger Vorsprung (13) befindet und
**dass** der Federring (7) und der Elastomerring (6) so zueinander ausgerichtet sind, dass der Federring (7) sowohl eine den Elastomerring (6) gegen die Zylinderfläche (11) des Grundkörpers (1) drückende Radialkraft (F_{R}) als auch eine den Elastomerring (6) gegen den Dichtungsring (4) drückende Axialkraft (F_{A}) auf den Elastomerring ausübt.

2. Dichtungsanordnung nach Anspruch 1, **dadurch gekennzeichnet, dass** der Federring (7) mit axialem Versatz (a) zum Elastomerring (6) angeordnet ist.

3. Dichtungsanordnung nach Anspruch 1 oder 2, **dadurch gekennzeichnet, dass** der ringförmige Vorsprung (13) zwischen der Stirnfläche des Druckringes (3) und der Führungsnut (12) den Einbauraum für den Elastomerring (6) kammert und zu diesem Zweck so bemessen ist, dass der Spalt (s) zwischen dem ringförmigen Vorsprung (13) und der Zylinderfläche (11) des Grundkörpers (1) etwas kleiner ist als die radiale Dicke (d) des Elastomerrings (6).

4. Dichtungsanordnung nach Anspruch 2 oder 3, **dadurch gekennzeichnet, dass** die Führungsnut (12) unter einem spitzen Winkel (a) an den Einbauraum für den Elastomerring (6) anschließt.

## Claims

1. A sealing arrangement for a gas-blocked slide ring seal on rotating shafts, in particular on shafts of gas compressors, with
an annular base element (1), arranged integral with the housing or mounted on a shaft (10),
a pressure ring (3) supported on springs (2) in the base element (1),
a sealing ring (4) held torsionally and axial mobile on the base element (1) with a precision-worked sealing surface of the front side averted from the pressure ring (3), and
a secondary seal (5) comprising an elastomer ring (6) and a spring-loaded ring (7) arranged in a guide groove (12) of the pressure ring (3),
whereby the secondary seal (5) is arranged in an annular space delimited by the sealing ring (4) and the pressure ring (3) and the elastomer ring (6) lies on a cylindrical face (11) of the base element (1) under the pre-tension of the spring-loaded ring (7) arranged on its periphery, **characterised in that**
the pressure ring (3) lies on the sealing ring (4) and the dimensions of the annular space accommodating the secondary seal (5) are such that the elastomer ring (6) is clamped neither axially nor radially by the chamber walls,
the guide groove (12) is arranged such that an annular projection (13) is positioned between the guide groove (12) and the front face of the pressure ring (3), and
the spring-loaded ring (7) and the elastomer ring (6) are aligned to one another such that the spring-loaded ring (7) exerts both a radial force (F_{R}) pressing the elastomer ring (6) against the cylindrical surface (11) of the base element (1) as well as an axial force (F_{A}) pressing the elastomer ring (6) against the sealing ring (4), on the elastomer ring.

2. The sealing arrangement as claimed in Claim 1, **characterised in that** the spring-loaded ring (7) is arranged with axial offset (a) to the elastomer ring (6).

3. The sealing arrangement as claimed in Claim 1 or 2, **characterised in that** the annular projection (13) between the front face of the pressure ring (3) and the guide groove (12) chambers the rebound space for the elastomer ring (6) and for this purpose is of such a size that the gap (s) between the annular projection (13) and the cylindrical surface (11) of the base elements (1) is slightly less than the radial thickness (d) of the elastomer ring (6).

4. The sealing arrangement as claimed in Claim 2 or 3, **characterised in that** the guide groove (12) adjoins the rebound space for the elastomer ring (6) at an acute angle (α).

## Revendications

1. Assemblage de joint pour un joint de bague d'étanchéité étanche aux gaz sur des arbres rotatifs, notamment sur des arbres de compresseurs à gaz, comprenant
une base (1) en forme d'anneau, qui est disposée de manière solidaire du logement et est montée sur un arbre (10),
un labyrinthe (3) appuyé à la base (1) par des ressorts (2),
une bague d'étanchéité (4) maintenue à la base (1) de manière solidaire en rotation et de manière à se déplacer axialement, comportant une surface de joint a usinée avec précision du côté frontal qui se détourne du labyrinthe (3),
un joint secondaire (5) constitué d'un anneau élastomère (6) et d'une rondelle élastique (7) disposée dans une rainure de guidage (12) du labyrinthe (3),
dans lequel le joint secondaire (5) est disposé dans un espace d'anneau délimité par la bague d'étanchéité (4) et le labyrinthe (3) et l'anneau élastomère (6) repose sur une surface (11) cylindrique par l'effet d'une prétension de la rondelle élastique (7) disposée sur son périmètre,
**caractérisé en ce que**
le labyrinthe (3) repose sur la bague d'étanchéité (4)et les dimensions de l'espace d'anneau qui reçoit le joint secondaire (5) sont sélectionnées de telle sorte que l'anneau élastomère (6) ne soit serré ni axialement, ni radialement par les parois de la chambre,
la rainure de guidage (12) est disposée de telle sorte qu'une saillie (13) en forme d'anneau se trouve entre la rainure de guidage (12) et la paroi frontale du labyrinthe (3),
la rondelle élastique (7) et l'anneau élastomère (6) sont orientés l'un par rapport à l'autre de telle sorte que la rondelle élastique (7) exerce sur l'anneau élastomère aussi bien un effort radial (F_{R}) qui presse l'anneau élastomère (6) contre la surface cylindrique (11) de la base (1) qu'un effort axial (F_{A}) qui presse l'anneau élastomère (6) contre la bague d'étanchéité (4).

2. Assemblage de joint selon la revendication 1, **caractérisé en ce que** la rondelle élastique (7) est disposée avec un chevauchement (a) axial sur l'anneau élastomère (6).

3. Assemblage de joint selon la revendication 1 ou 2, **caractérisé en ce que** la saillie (13) en forme d'anneau définit l'espace de montage de l'anneau élastomère (6) entre la surface frontale du labyrinthe (3) et la rainure de guidage (12) et, dans ce but, présente des dimensions telles que la fente (s) entre la saillie (13) en forme d'anneau et la surface cylindrique (11) de la base (1) soit quelque peu inférieure à l'épaisseur (d) radiale de l'anneau élastomère (6).

4. Assemblage de joint selon la revendication 2 ou 3, **caractérisé en ce que** la rainure de guidage (12) est raccordée à l'espace de montage de l'anneau élastomère (6) par un angle aigu (α).
